# FASCICULE DE BREVET EUROPEEN

(11) **EP 0 970 854 B1**
(45) Date de publication et mention de la délivrance du brevet: **31.07.2002**
(21) Numéro de dépôt: 99401615.2
(22) Date de dépôt: 29.06.1999
(51) Int. Cl.: B60R 19/24

(54) **Dispositif de fixation des crosses d'un pare-chocs sur une aile de carrosserie de véhicule**
Vorrichtung zur Befestigung der Seitenschenkel einer Stossstange auf einem Fahrzeugkarosserie-Kotflügel
Device for fastening the side wings of a bumper on a vehicle body fender panel

(30) Priorité: 07.07.1998 FR 9808677
(43) Date de publication de la demande: 12.01.2000
(73) Titulaire: COMPAGNIE PLASTIC OMNIUM Société Anonyme dite:, 69007 Lyon (FR)
(72) Inventeur: Cordebar, Francis, 01100 Oyonnax (FR)
(74) Mandataire: Leszczynski, André

(56) Documents cités:
- WO-A-96/08393
- FR-A- 2 728 846
- FR-A- 2 744 966

## Description

La présente invention concerne un dispositif de fixation des crosses d'un pare-chocs sur une aile de carrosserie de véhicule.

La société demanderesse a déjà décrit, dans sa demande de brevet français publiée sous le n° 2 728 846, un dispositif de fixation ou de mise en référence des crosses d'un pare-chocs sur les ailes avant d'un véhicule automobile.

Un tel dispositif comporte, sur chaque crosse du pare-chocs, un rebord supérieur plan dirigé vers l'intérieur, et, sous le bord inférieur avant de l'aile, un logement pour ledit rebord, d'épaisseur sensiblement égale ou légèrement supérieure à l'épaisseur dudit rebord, une fenêtre étant ménagée dans le rebord de la crosse du pare-chocs, tandis qu'un ergot élastique est prévu dans l'épaisseur du logement, pour pénétrer dans ladite fenêtre lorsque le pare-chocs est en place et retenir le rebord dans son logement.

Le dispositif décrit dans cette demande antérieure comprend des paires de surfaces de référence et de portées d'appui, ainsi qu'une surface de butée et une portée de butée qui permettent le positionnement précis des crosses du pare-chocs par un simple mouvement de translation vers l'arrière du véhicule.

Dans ce dispositif antérieur, le rebord de la crosse ne peut évoluer dans le logement que suivant un mouvement de translation vers l'avant ou vers l'arrière du véhicule, ce qui entraîne deux conséquences nuisant à la mise en oeuvre de ce dispositif connu de fixation.

Tout d'abord, le démontage du pare-chocs ne peut se faire que suivant un mouvement de translation vers l'avant de ce dernier, ce qui n'est pas toujours réalisable si le véhicule a subi une collision, principale cause de remplacement du pare-chocs.

De plus, la mise en place du pare-chocs par translation vers l'arrière requiert que les crosses du pare-chocs se trouvent rigoureusement dans l'alignement des logements prévus sur les ailes, condition qui est en pratique rarement remplie du fait que les pare-chocs sortant de chaîne de fabrication subissent des contraintes internes qui les tordent, et referment ou ouvrent leurs crosses.

Le document WO 96/08398 décrit un autre dispositif suivant le préambule de la revendication 1.

La présente invention vise à fournir un nouveau dispositif de fixation, qui permet à la fois la mise en place et le démontage du pare-chocs sur les ailes du véhicule, moyennant un minimum de manipulations et selon des mouvements variés d'approche des crosses par rapport aux ailes.

En d'autres termes, grâce à l'invention, la translation de chaque crosse en direction de l'aile peut s'effectuer suivant un angle quelconque.

La présente invention a pour objet un dispositif de fixation des crosses d'un pare-chocs sur des ailes de carrosserie de véhicule comportant, sur chaque crosse du pare-chocs, un rebord supérieur plan dirigé vers l'intérieur et, sous le bord inférieur avant de l'aile, un logement pour ledit rebord, d'épaisseur sensiblement égale ou légèrement supérieure à l'épaisseur dudit rebord, une fenêtre étant ménagée dans le rebord de la crosse du pare-chocs, tandis qu'un ergot élastique est prévu dans l'épaisseur du logement, pour pénétrer dans ladite fenêtre lorsque le pare-chocs est en place et retenir le rebord dans son logement, caractérisé par le fait que l'ergot comporte un bossage destiné à pénétrer dans la fenêtre du rebord, et que ce bossage est muni, sur son côté extérieur dirigé vers l'extérieur du véhicule, d'un premier chanfrein qui, lors d'un mouvement de translation de la crosse perpendiculaire à la direction de déplacement du véhicule, provoque l'effacement de l'ergot devant le rebord de la crosse, et, sur son côté avant dirigé vers l'avant du véhicule, d'un second chanfrein, qui, lors d'un coulissement de la crosse vers l'arrière du véhicule provoque également l'effacement de l'ergot devant le rebord de la crosse.

Grâce à ses deux chanfreins, le bossage peut ainsi profiter de tout mouvement de translation de la crosse suivant une direction quelconque ayant une composante perpendiculaire à la direction de déplacement du véhicule et une composante dirigée vers l'arrière du véhicule, pour effacer l'ergot et permettre la mise en place du pare-chocs, quelle que soit la forme initiale de ce dernier.

Dans un mode de réalisation préféré de l'invention, le bossage comporte, en outre, un troisième chanfrein sur son côté arrière, dirigé vers l'arrière du véhicule, pour provoquer l'effacement de l'ergot lors d'un coulissement de la crosse vers l'avant de véhicule à l'intérieur du logement, ce qui permet le démontage du pare-chocs.

On comprend que le coulissement vers l'avant de la crosse, requis pour effacer l'ergot et permettre le démontage du pare-chocs, doit se faire sur une course relativement faible qui correspond à la longueur du troisième chanfrein. Le mouvement ultérieur de la crosse peut ensuite être dirigé suivant un angle quelconque.

Pour le maintien du pare-chocs dans la direction de déplacement du véhicule, le dispositif comporte en outre une vis traversant à la fois la crosse et l'aile. Le démontage de cette unique vis permet, moyennant le mouvement de coulissement vers l'avant précité, de désolidariser du logement le rebord de la crosse.

Dans un mode de réalisation préféré de l'invention, les parties de l'aile appartenant au dispositif de fixation sont réalisées d'un seul tenant avec ladite aile, lors de son moulage par injection de matière plastique.

Il en va de même du rebord supérieur plan du pare-chocs.

Avantageusement, le positionnement latéral de la crosse par rapport à l'aile est assuré de manière précise grâce à la présence de butées au fond du logement recevant le rebord.

La présente invention comporte une variante dans laquelle la fenêtre est prévue non pas sur le rebord de la crosse, mais sur l'aile, tandis que l'ergot se trouve non pas sur l'aile mais sur le rebord de la crosse.

Dans cette variante, l'invention à pour objet un dispositif de fixation des crosses d'un pare-chocs sur des ailes de carrosserie de véhicule comportant, sur chaque crosse du pare-chocs, un rebord supérieur plan dirigé vers l'intérieur et, sous le bord inférieur avant de l'aile, un logement pour ledit rebord, délimité par deux parois sensiblement parallèles, ledit logement ayant une épaisseur sensiblement égale ou légèrement supérieure à l'épaisseur dudit rebord, une fenêtre étant ménagée dans l'une des parois du logement, tandis qu'un ergot élastique est prévu en saillie du rebord de la crosse du pare-chocs, du côté de ladite fenêtre, pour pénétrer dans ladite fenêtre lorsque le pare-chocs est en place et retenir ainsi le rebord dans son logement, caractérisé par le fait que l'ergot comporte un bossage destiné à pénétrer dans la fenêtre et que ce bossage est muni, sur son côté intérieur dirigé vers l'intérieur du véhicule, d'un premier chanfrein qui, lors d'un mouvement de translation de la crosse perpendiculaire à la direction de déplacement du véhicule, provoque l'effacement de l'ergot devant la paroi du logement et, sur son côté arrière dirigé vers l'arrière du véhicule, d'un second chanfrein, qui, lors d'un coulissement de la crosse vers l'arrière du véhicule, provoque l'effacement de l'ergot devant la paroi de la crosse.

Dans cette variante, le troisième chanfrein est situé sur le côté avant de l'ergot, dirigé vers l'avant du véhicule, pour provoquer l'effacement de l'ergot lors du coulissement de la crosse vers l'avant du véhicule à l'intérieur du logement, pour le démontage du pare-chocs.

Dans le but de mieux faire comprendre l'invention, on va en décrire maintenant un mode de réalisation donné à titre d'exemple en référence, au dessin annexé dans lequel :
- la figure 1 est une vue en perspective partiellement arrachée d'une aile et d'une crosse de pare-chocs de véhicule automobile,
- la figure 2 est une vue rapprochée et en coupe selon II-II d'une partie de la figure 1,
- la figure 3 est une vue rapprochée et en coupe selon III-III de la figure 1,
- la figure 4 est une vue analogue à la figure 3 lors de l'engagement du rebord dans le logement,

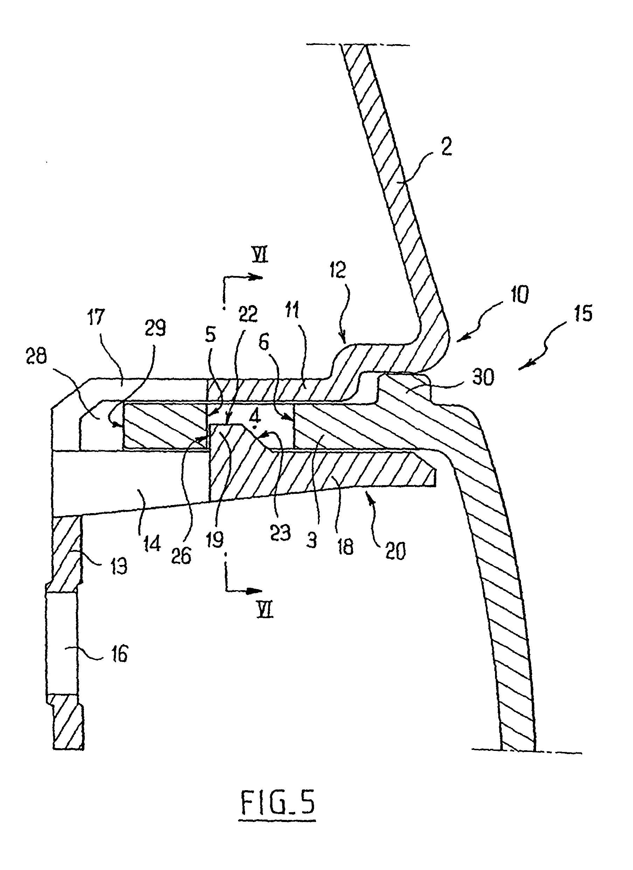

- la figure 5 est une vue analogue à la figure 3 après mise en place du rebord dans le logement,

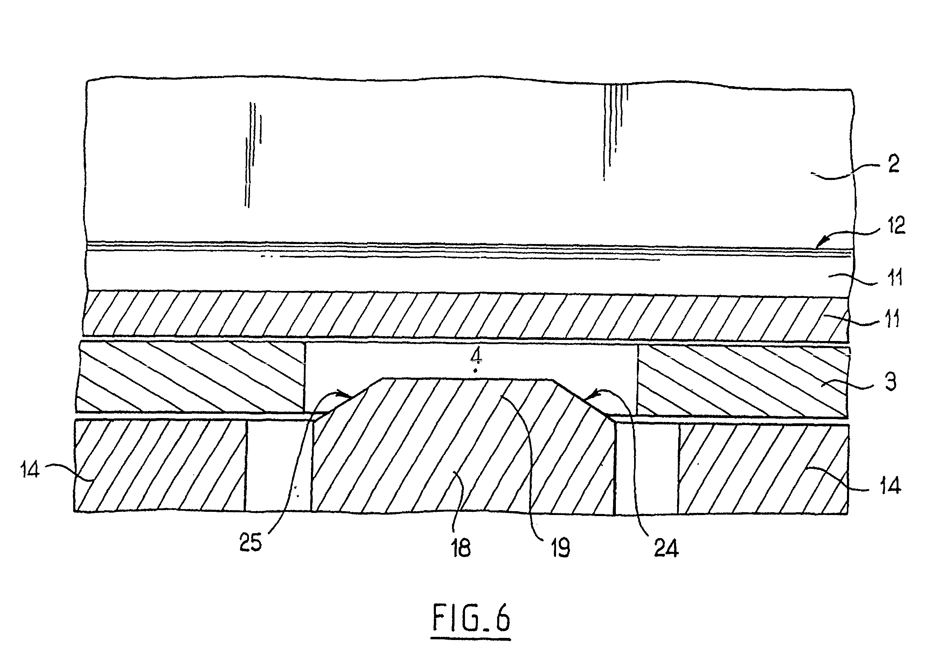

- la figure 6 est une vue en coupe selon VI-VI de la figure 5,
- la figure 7 est une vue analogue à la figure 6 lors du coulissement du rebord vers l'avant du véhicule,
- la figure 8 est une vue en coupe selon VIII-VIII de la figure 7,
- la figure 9 est une vue en élévation d'un autre pare-chocs mis en place sur une autre aile à l'aide de deux dispositifs de fixation.

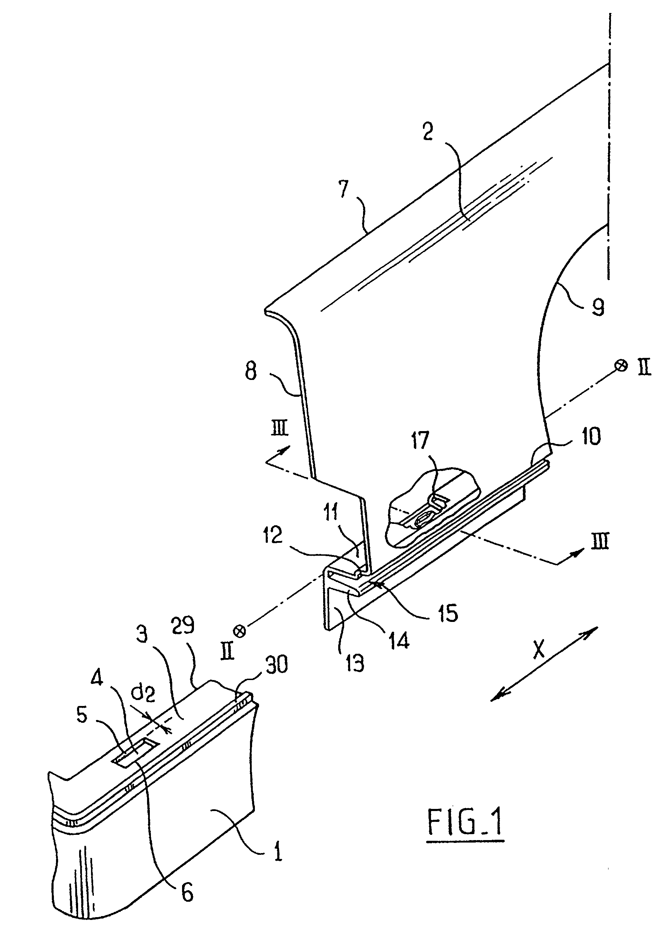

Sur la figure 1, on voit la crosse gauche 1 d'un pare-chocs avant de véhicule automobile (non représenté) et la partie avant d'une aile avant gauche 2 du même véhicule.

On voit que la crosse 1 comporte un rebord supérieur plan 3 dirigé vers l'intérieur du pare-chocs. Ce rebord est horizontal dans la position normale d'utilisation du pare-chocs.

Ce rebord comporte, le traversant dans toute son épaisseur, une fenêtre rectangulaire 4 dont les grands côtés 5,6 sont parallèles à la direction X de déplacement du véhicule.

L'aile 2 est délimitée dans sa partie avant par un bord supérieur 7 qui longe le capot, par une frontière avant 8 qui borde un bloc optique et la calandre (non représentés) du véhicule, par une frontière arrière 9 qui délimite le passage de roue, et par un bord inférieur 10 le long duquel la crosse 1 du pare-chocs doit se mettre en place.

En dessous de ce bord inférieur 10 et en retrait vers l'intérieur du véhicule, l'aile comporte une structure prévue pour recevoir la crosse 1 du pare-chocs.

Cette structure se compose d'une première cloison 11 qui s'étend sensiblement horizontalement vers l'intérieur du véhicule et comporte un décrochement 12 environ au premier tiers de sa largeur, puis d'une deuxième cloison 13 verticale qui s'étend vers le bas à partir de l'extrémité de la première cloison 11 et qui supporte une nervure longitudinale 14 dirigée vers l'extérieur du véhicule et s'étendant transversalement jusqu'au décrochement 12 de la première cloison, pour définir avec cette dernière un logement 15 pour le rebord 3 de la crosse 1 du pare-chocs.

Ledit logement 15 a une épaisseur décroissante depuis son ouverture, en dessous du bord inférieur 10 de l'aile, jusqu'à son fond où ladite épaisseur est sensiblement égale à celle du rebord 3.

L'aile 2 est assujettie au châssis du véhicule par deux fixations glissantes (non représentées) placées dans des orifices 16 de la partie inférieure de la deuxième cloison 13.

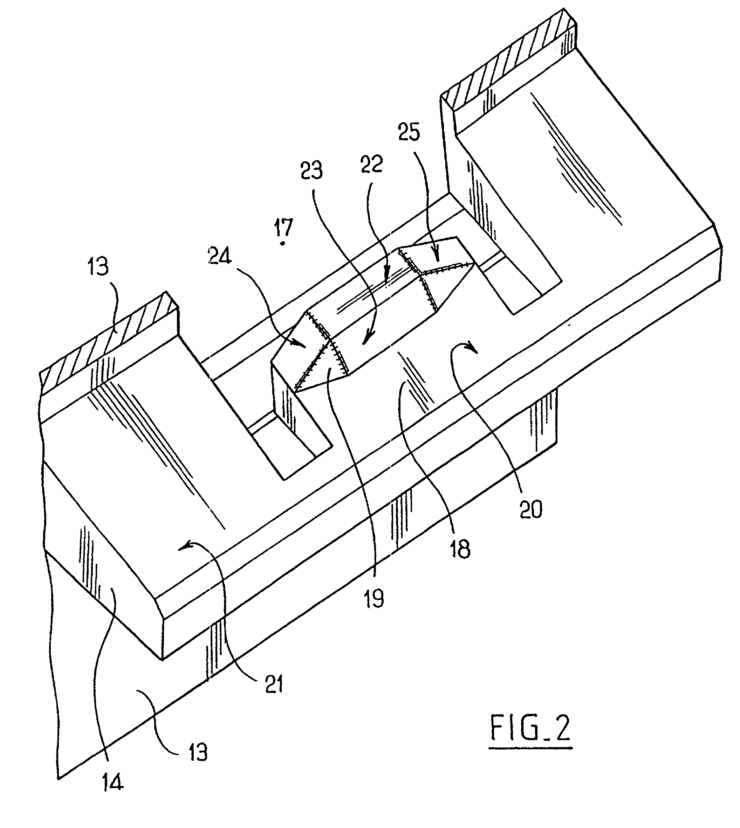

Comme on le voit dans la partie partiellement arrachée de l'aile, un évidement 17 s'étend sur une partie de la première cloison 11 et de la deuxième cloison 13, ici sensiblement au milieu de la longueur du bord inférieur 10 de l'aile. Au droit de cet évidement 17, la nervure 14 est découpée de manière à dégager un ergot 18 surmonté d'un bossage 19, comme on le voit plus précisément à la figure 2.

Cet ergot 18 est issu directement de moulage avec l'aile 2, grâce à l'évidement 17, prévu dans les première et deuxième cloisons, qui permet le démoulage de l'aile sans avoir à recourir à des noyaux de moulage mobiles.

L'ergot 18 est solidaire de la nervure 14 par son côté 20 dirigé vers l'extérieur du véhicule, à l'opposé de son bossage 19.

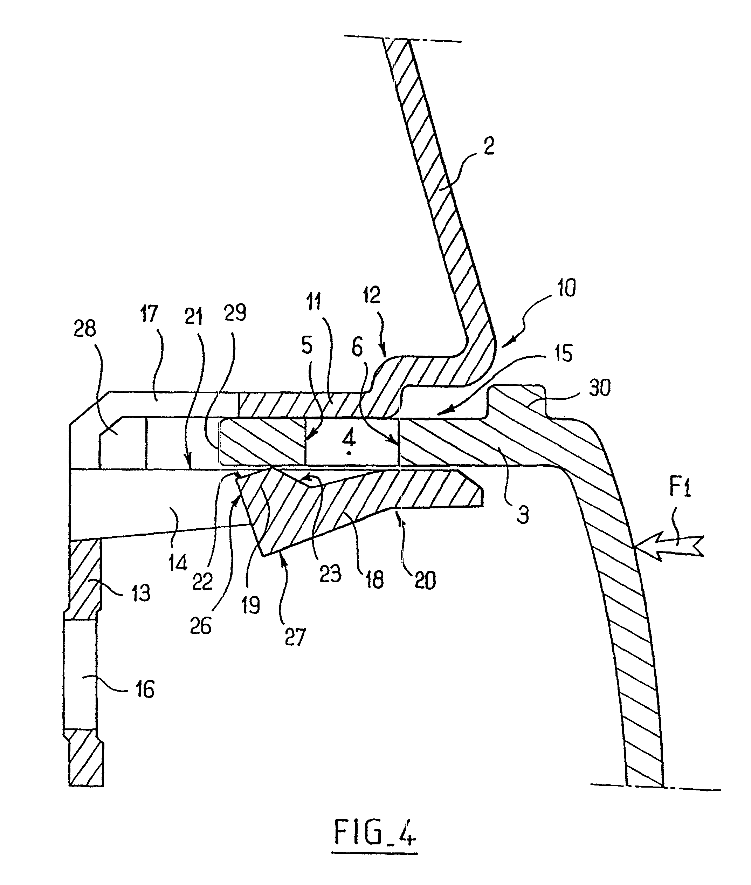

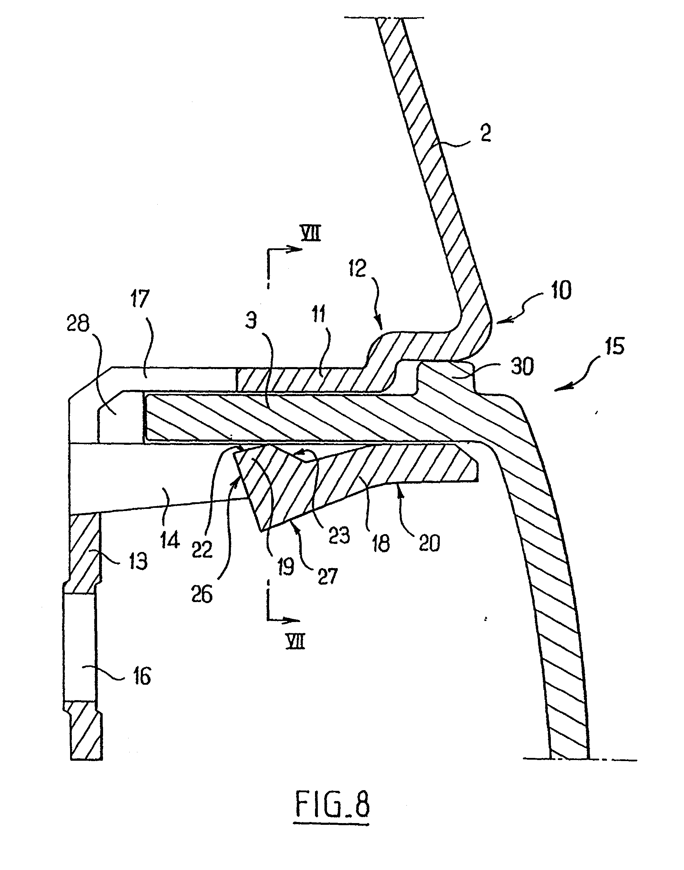

Du fait de l'élasticité de la matière plastique constituant l'aile, l'ergot peut fléchir élastiquement sous l'effet d'une force dirigée vers le bas exercée sur son bossage, comme on le voit aux figures 4 et 8.

Le bossage 19 de l'ergot fait saillie de la surface de ce dernier, surface qui est elle-même située dans le plan de la face supérieure 21 de la nervure 14.

Ledit bossage 19 comporte une face supérieure 22 sensiblement horizontale qui est raccordée au plan de la face supérieure 21 de la nervure 14 par un premier chanfrein 23 situé du côté du bossage dirigé vers l'extérieur du véhicule par un second chanfrein avant 24, et par un troisième chanfrein arrière 25, situés l'un en avant et l'autre en arrière de la surface supérieure 22, dans le sens de déplacement du véhicule, c'est-à-dire parallèlement au bord inférieur 10 de l'aile.

On remarquera que les arêtes séparant les chanfreins du bossage sont arrondies pour faciliter le coulissement du rebord de la crosse sur le bossage et son passage sur l'un quelconque des chanfreins ou sur les arêtes les séparant, dans l'hypothèse où la direction de mise en place ou de retrait du pare-chocs comporte une composante perpendiculaire à la direction de déplacement du véhicule et une composante parallèle à la direction de déplacement du véhicule.

Sur son côté dirigé vers l'intérieur du véhicule, à l'opposé du premier chanfrein 23, le bossage 19 comporte une face verticale 26 perpendiculaire au plan de la face supérieure 21 de la nervure, face verticale 26 qui se prolonge sur toute la hauteur de l'ergot jusqu'à sa face inférieure 27.

Les dimensions du bossage 19 sont choisies de manière que ce dernier puisse pénétrer dans la fenêtre 4 ménagée dans l'épaisseur du rebord 3 de la crosse 1 du pare-chocs.

Au fond du logement 15, sont prévues des butées 28 contre lesquelles le rebord 3 de la crosse du pare-chocs vient prendre appui pour se positionner avec précision par rapport à l'aile suivant la direction transversale.

La longueur de l'ergot 18 est telle que la face verticale 26 est séparée des butées 28 par une distance d1 sensiblement égale à celle d2 qui sépare le bord intérieur 29 du rebord 3 de la crosse et le bord intérieur 5 de la fenêtre 4.

La mise en place du pare-chocs s'effectue de la manière suivante :

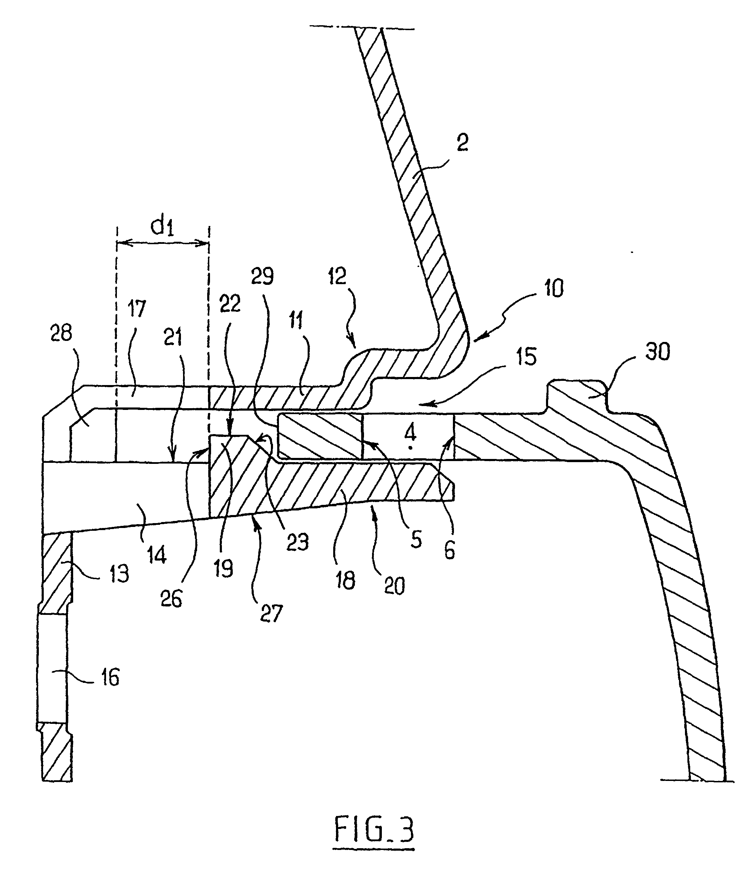

On écarte légèrement vers l'extérieur les crosses 3 du pare-chocs pour les positionner en face des logements 15 de chaque aile, puis on ramène les crosses vers l'intérieur pour présenter leurs rebords 3 dans l'embouchure des logements 15, comme on le voit à la figure 3.

On exerce ensuite une force horizontale F1 dirigée vers l'intérieur du véhicule sur chaque crosse.

Le bord intérieur 29 du rebord transmet cette force F1 au bossage 19 de l'ergot 18 dont le premier chanfrein 23 transforme ladite force horizontale F1 en une force ayant une composante dirigée vers le bas, qui déforme l'ergot 18 jusqu'à ce que ce dernier atteigne la position représentée à la figure 4 dans laquelle le bossage 19 est complètement escamoté et libère la section du logement 15, permettant le passage du rebord 3 de la crosse.

Une fois que le bord 29 de ce rebord 3 est arrivé en appui contre les butées 28 situées au fond du logement, la fenêtre 4 se trouve au droit du bossage 19. L'ergot 18 reprend alors sa forme initiale, la face verticale 26 du bossage venant en appui contre le grand côté 5 de la fenêtre située le plus à l'intérieur du véhicule.

Le rebord 3 se trouve ainsi immobilisé transversalement.

De préférence, on positionne les butées 28 de part et d'autre de l'ergot 18 de manière à permettre une légère flexion de la crosse et de son rebord 3 dans le sens longitudinal, c'est-à-dire suivant la direction X de déplacement du véhicule, afin que le grand côté intérieur 5 de la fenêtre puisse dégager nettement l'ergot 18 au moment où le bord 29 du rebord 3 arrive contre les butées 28, puis revienne élastiquement en appui contre la face verticale intérieure 26 de l'ergot. En prévoyant un ergot très légèrement plus long, on peut en outre "tendre" le rebord entre les butées 28 et le bossage 19.

Pour son positionnement vertical, le rebord 3 comporte, le long de son arête supérieure, une nervure longitudinale 30 qui s'appuie contre la partie de la première cloison 11 de l'aile située avant le décrochement vertical 12 et évite que le montage du pare-chocs n'entraîne une détérioration de la peinture de l'aile.

Cette nervure longitudinale 30 de la crosse remplit en outre la fonction de masquer l'intérieur du logement 15, la fenêtre 4 et l'ergot 18, qui sont ainsi rendus invisibles depuis l'extérieur de véhicule.

Dans une autre variante, non représentée, le rebord de la crosse s'appuie directement contre la première cloison 11 qui ne comporte alors pas de décrochement.

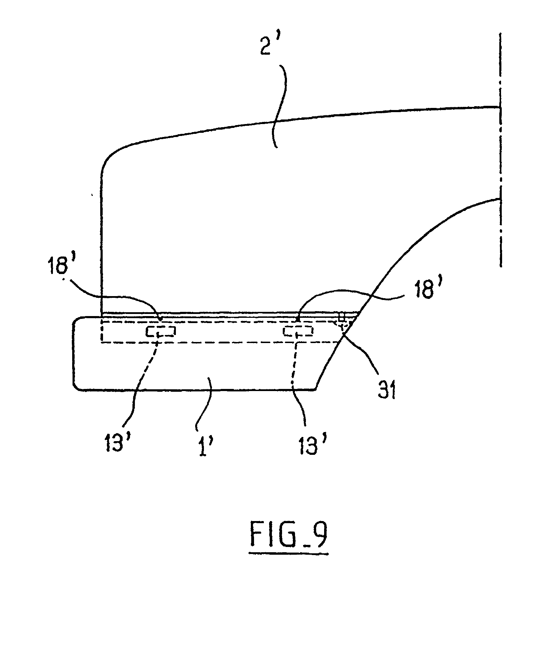

Le positionnement transversal et vertical de la crosse étant ainsi assuré, on immobilise la crosse longitudinalement à l'aide d'une vis 31 qui peut, par exemple, se situer à proximité du passage de roue, comme cela est représenté à la figure 9.

On va maintenant décrire les opérations à effectuer pour démonter le pare-chocs.

La première étape consiste à retirer la vis 31 précitée.

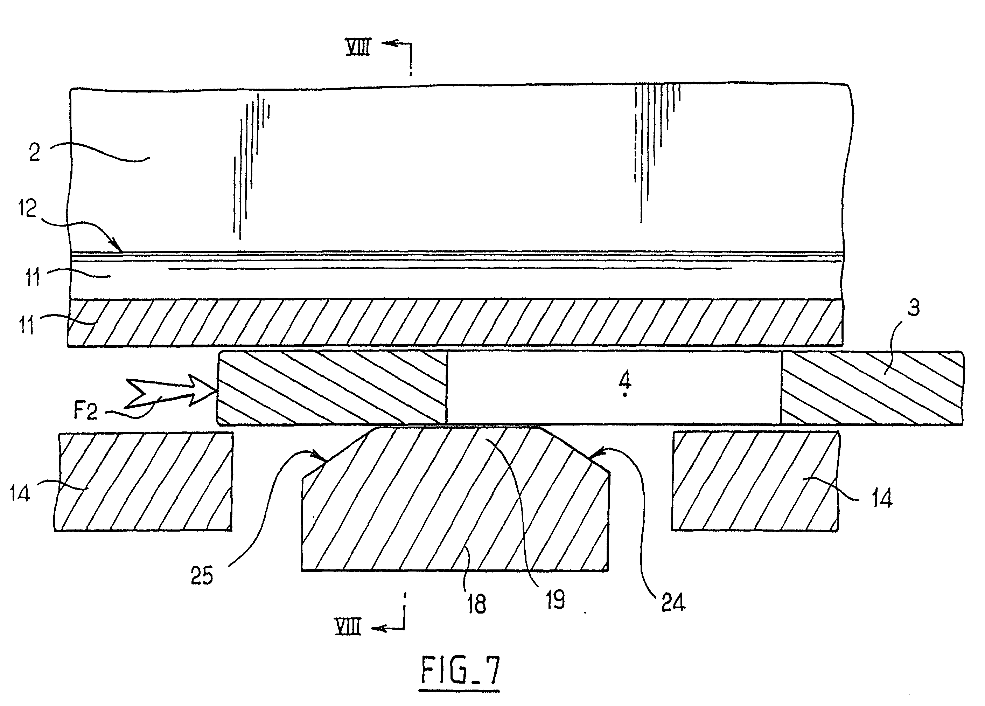

Dans un second temps, on fait coulisser les crosses 3 du pare-chocs vers l'avant sur une course au moins égale à la longueur du troisième chanfrein arrière 25, de sorte que la force F2 exercée sur la crosse provoque l'effacement du chanfrein 25, comme on le voit à la figure 7.

Une fois le bossage 19 escamoté, on écarte les crosses 3 du pare-chocs en les tirant vers l'extérieur du véhicule, ce qui libère le pare-chocs.

Sur la figure 9, on a représenté schématiquement un autre pare-chocs similaire au précédent en position sur une aile également similaire à la précédente.

L'aile 2' comporte des ergots (non représentés) dont l'emplacement est indiqué par des points 18' sur la figure 9.

Le rebord de la crosse 1' du pare-chocs comporte deux fenêtres, chacune en regard d'un ergot.

Le pare-chocs est ainsi positionné par rapport à l'aile par deux dispositifs de fixation qui assurent son positionnement latéral et vertical. Son positionnement longitudinal est assuré par la vis 31 qui traverse le rebord de la crosse et la première cloison de l'aile.

A la lumière des exemples ci-dessus, on voit que le dispositif de fixation selon l'invention permet un montage et un démontage très simples et très rapides des crosses du pare-chocs sur les ailes du véhicule.

Il est bien entendu que les modes de réalisation qui viennent d'être décrits ne présentent aucun caractère limitatif et qu'ils pourront recevoir toutes modifications désirables sans sortir pour cela du cadre de l'invention telle que revendiquée.

En particulier, on comprend que l'invention concerne tout aussi bien la partie arrière que la partie avant d'un véhicule.

## Revendications

1. Dispositif de fixation des crosses (1) d'un pare-chocs sur des ailes (2) de carrosserie de véhicule comportant, sur chaque crosse du pare-chocs, un rebord supérieur plan (3) dirigé vers l'intérieur et, sous le bord inférieur avant (10) de l'aile, un logement (15) pour ledit rebord (3), d'épaisseur sensiblement égale ou légèrement supérieure à l'épaisseur dudit rebord, une fenêtre (4) étant ménagée dans le rebord de la crosse du pare-chocs, tandis qu'un ergot élastique (18) est prévu dans l'épaisseur du logement, pour pénétrer dans ladite fenêtre lorsque le pare-chocs est en place et retenir ainsi le rebord dans son logement, l'ergot comportant un bossage (19) destiné à pénétrer dans la fenêtre (4) du rebord, **caractérisé par le fait que** ce bossage est muni, sur son côté extérieur dirigé vers l'extérieur du véhicule, d'un premier chanfrein (23) qui, lors d'un mouvement de translation de la crosse perpendiculaire à la direction de déplacement (X) du véhicule, provoque l'effacement de l'ergot devant le rebord de la crosse, et, sur son côté avant dirigé vers l'avant du véhicule, d'un second chanfrein (24), qui, lors d'un coulissement de la crosse vers l'arrière du véhicule, provoque l'effacement de l'ergot devant le rebord de la crosse.

2. Dispositif selon la revendication 1, **caractérisé par le fait que** le bossage comporte, en outre, un troisième chanfrein (25) sur son côté arrière, dirigé vers l'arrière du véhicule, pour provoquer l'effacement de l'ergot lors d'un coulissement de la crosse vers l'avant de véhicule à l'intérieur du logement, ce qui permet le démontage du pare-chocs.

3. Dispositif de fixation des crosses (1) d'un pare-chocs sur des ailes (2) de carrosserie de véhicule comportant, sur chaque crosse du pare-chocs, un rebord supérieur plan (3) dirigé vers l'intérieur et, sous le bord inférieur avant (10) de l'aile, un logement (15) pour ledit rebord (3) délimité par deux parois sensiblement parallèles, ledit logement ayant une épaisseur sensiblement égale ou légèrement supérieure à l'épaisseur dudit rebord, une fenêtre (4) étant ménagée dans l'une des parois du logement, tandis qu'un ergot élastique (18) est prévu en saillie du rebord de la crosse du pare-chocs, du côté de ladite fenêtre, pour pénétrer dans ladite fenêtre lorsque le pare-chocs est en place et retenir ainsi le rebord dans son logement, l'ergot comportant un bossage (19) destiné à pénétrer dans la fenêtre (4), et **caractérisé par le fait que** ce bossage est muni, sur son côté intérieur dirigé vers l'intérieur du véhicule, d'un premier chanfrein qui, lors d'un mouvement de translation de la crosse perpendiculaire à la direction de déplacement (X) du véhicule, provoque l'effacement de l'ergot devant la paroi du logement et, sur son côté arrière dirigé vers l'arrière du véhicule, d'un second chanfrein, qui, lors d'un coulissement de la crosse vers l'arrière du véhicule, provoque l'effacement de l'ergot devant la paroi de la crosse.

4. Dispositif selon la revendication 3, **caractérisé par le fait que** le bossage comporte, en outre, un troisième chanfrein sur son côté avant dirigé vers l'avant du véhicule, pour provoquer l'effacement de l'ergot lors d'un coulissement de la crosse vers l'avant de véhicule à l'intérieur du logement, ce qui permet le démontage du pare-chocs.

5. Dispositif selon l'une quelconque des revendications 1 à 4, **caractérisé par le fait que** des butées (28) sont prévues au fond du logement (15).

6. Dispositif selon l'une quelconque des revendications 1 à 5, **caractérisé par le fait que** le rebord (3) comporte une nervure longitudinale (30) qui s'appuie contre une cloison (11) qui s'étend sensiblement horizontalement vers l'intérieur du véhicule en dessous du bord inférieur (10) de l'aile.

7. Dispositif selon l'une quelconque des revendications 1 à 6, **caractérisé par le fait qu'**il comporte en outre une vis (31) traversant à la fois la crosse et l'aile et assurant le maintien du pare-chocs dans la direction de déplacement du véhicule.

8. Dispositif selon l'une quelconque des revendications 1 à 7, **caractérisé par le fait que** ses parties constitutives sont directement issues du moulage de l'aile et du pare-chocs.

## Patentansprüche

1. Vorrichtung zur Befestigung der Seitenschenkel (1) einer Stoßstange an Fahrzeugkarosserie-Kotflügeln (2), mit - an jedem Seitenschenkel der Stoßstange - einer nach innen gerichteten oberen ebenen Randleiste (3) und - unter dem vorderen unteren Rand (10) des Kotflügels - einer Aufnahme (15) für die genannte Randleiste (3), deren Dicke im Wesentlichen der Dicke der genannten Randleiste entspricht oder geringfügig größer ist, wobei ein Fenster (4) in der Randleiste des Seitenschenkels der Stoßstange ausgebildet ist, während ein elastischer Vorsprung (18) in der Dicke der Aufnahme vorgesehen ist, um in das genannte Fenster einzudringen, wenn die Stoßstange angebracht ist und um auf diese Weise die Randleiste in ihrer Aufnahme zu halten, wobei der Vorsprung einen Buckel (19) aufweist, der in das Fenster (4) der Randleiste eindringen soll, **dadurch gekennzeichnet, dass** dieser Buckel an seiner zur Außenseite des Fahrzeugs gerichteten Außenseite mit einer ersten Fase (23) versehen ist, die bei einer Verschiebebewegung des Seitenschenkels senkrecht zur Bewegungsrichtung (X) des Fahrzeugs das Zurückweichen des Vorsprungs vor der Randleiste des Seitenschenkels bewirkt, und an seiner zum vorderen Teil des Fahrzeugs gerichteten Vorderseite mit einer zweiten Fase (24) versehen ist, die bei einem Verschieben des Seitenschenkels zum hinteren Teil des Fahrzeugs das Zurückweichen des Vorsprungs vor der Randleiste des Seitenschenkels bewirkt.

2. Vorrichtung nach Anspruch 1, **dadurch gekennzeichnet, dass** der Buckel weiterhin an seiner zum hinteren Teil des Fahrzeugs gerichteten Rückseite eine dritte Fase (25) aufweist, um das Zurückweichen des Vorsprungs bei einem Verschieben des Seitenschenkels zum vorderen Teil des Fahrzeugs innerhalb der Aufnahme zu bewirken, wodurch es möglich ist, die Stoßstange zu demontieren.

3. Vorrichtung zur Befestigung der Seitenschenkel (1) einer Stoßstange an Fahrzeugkarosserie-Kotflügeln (2), mit - an jedem Seitenschenkel der Stoßstange - einer nach innen gerichteten oberen ebenen Randleiste (3) und - unter dem vorderen unteren Rand (10) des Kotflügels - einer durch zwei im Wesentlichen parallele Wände begrenzte Aufnahme (15) für die genannte Randleiste (3), wobei die Dicke der Aufnahme im Wesentlichen der Dicke der genannten Randleiste entspricht oder geringfügig größer ist, wobei ein Fenster (4) in einer der Wände der Aufnahme ausgebildet ist, während ein elastischer Vorsprung (18) auf der Seite des genannten Fensters von der Randleiste des Seitenschenkels der Stoßstange vorspringend vorgesehen ist, um in das genannte Fenster einzudringen, wenn die Stoßstange angebracht ist und um auf diese Weise die Randleiste in ihrer Aufnahme zu halten, wobei der Vorsprung einen Buckel (19) aufweist, der in das Fenster (4) eindringen soll, **dadurch gekennzeichnet, dass** dieser Buckel an seiner zur Innenseite des Fahrzeugs gerichteten Innenseite mit einer ersten Fase versehen ist, die bei einer Verschiebebewegung des Seitenschenkels senkrecht zur Bewegungsrichtung (X) des Fahrzeugs das Zurückweichen des Vorsprungs vor der Wand der Aufnahme bewirkt, und an seiner zum hinteren Teil des Fahrzeugs gerichteten Rückseite mit einer zweiten Fase versehen ist, die bei einem Verschieben des Seitenschenkels zum hinteren Teil des Fahrzeugs das Zurückweichen des Vorsprungs vor der Wand des Seitenschenkels bewirkt.

4. Vorrichtung nach Anspruch 3, **dadurch gekennzeichnet, dass** der Buckel weiterhin an seiner zum vorderen Teil des Fahrzeugs gerichteten Vorderseite eine dritte Fase aufweist, um das Zurückweichen des Vorsprungs bei einem Verschieben des Seitenschenkels zum vorderen Fahrzeugteil innerhalb der Aufnahme zu bewirken, wodurch es möglich ist, die Stoßstange zu demontieren.

5. Vorrichtung nach irgendeinem der Ansprüche 1 bis 4, **dadurch gekennzeichnet, dass** Anschläge (28) hinten in der Aufnahme (15) vorgesehen sind.

6. Vorrichtung nach irgendeinem der Ansprüche 1 bis 5, **dadurch gekennzeichnet, dass** die Randleiste (3) eine Längsrippe (30) aufweist, welche an einer Zwischenwand (11) anliegt, die sich im Wesentlichen waagerecht zur Innenseite des Fahrzeugs unterhalb des unteren Randes (10) des Kotflügels erstreckt.

7. Vorrichtung nach irgendeinem der Ansprüche 1 bis 6, **dadurch gekennzeichnet, dass** sie außerdem eine Schraube (31) aufweist, die gleichzeitig den Seitenschenkel und den Kotflügel durchdringt und gewährleistet, dass die Stoßstange in Bewegungsrichtung des Fahrzeuges gehalten wird.

8. Vorrichtung nach irgendeinem der Ansprüche 1 bis 7, **dadurch gekennzeichnet, dass** ihre Grundbestandteile direkt aus dem Formen des Kotflügels und der Stoßstange hervorgegangen sind.

## Claims

1. Device for fastening the side wings (1) of a bumper to the wings (2) of vehicle bodywork comprising, on each side wing of the bumper, a flat upper rim (3) facing towards the inside and, under the front lower edge (10) of the wing of the bodywork, a housing (15) for the said rim (3), of a thickness roughly equal to or slightly greater than the thickness of the said rim, an opening (4) being made in the rim of the side wing of the bumper, while an elastic peg (18) is provided in the thickness of the housing, so as to enter the said opening when the bumper is in place and thus hold the rim in its housing, the peg comprising a boss (19) intended to enter the opening (4) of the rim, **characterized in that** this boss is equipped, on its outer side facing towards the outside of the vehicle, with a first chamfer (23) which, when the side wing of the bumper is moved in translation at right angles to the direction of travel (X) of the vehicle, causes the peg to become effaced before the rim of the side wing of the bumper, and, on its front side facing towards the front of the vehicle, with a second chamfer (24) which, as the side wing of the bumper is slid towards the rear of the vehicle, causes the peg to become effaced before the rim of the side wing of the bumper.

2. Device according to Claim 1, **characterized in that** the boss further comprises a third chamfer (25) on its rear side facing towards the rear of the vehicle, so as to cause the peg to become effaced when the side wing of the bumper is slid towards the front of the vehicle within the housing, thus allowing the bumper to be removed.

3. Device for fastening the side wings (1) of a bumper to the wings (2) of vehicle bodywork comprising, on each side wing of the bumper, a flat upper rim (3) facing towards the inside and, under the front lower edge (10) of the wing of the bodywork, a housing (15) for the said rim (3) delimited by two roughly parallel walls, the said housing having a thickness roughly equal to or slightly greater than the thickness of the said rim, an opening (4) being made in one of the walls of the housing, while an elastic peg (18) is provided projecting from the rim of the side wing of the bumper, on the same side as the said opening, so as to enter the said opening when the bumper is in place and thus hold the rim in its housing, the peg comprising a boss (19) intended to enter the opening (4), and **characterized in that** this boss is equipped, on its inner side facing towards the inside of the vehicle, with a first chamfer which, when the side wing of the bumper is moved in translation at right angles to the direction of travel (X) of the vehicle, causes the peg to become effaced before the wall of the housing, and, on its rear side facing towards the rear of the vehicle, with a second chamfer which, as the side wing of the bumper is slid towards the rear of the vehicle, causes the peg to become effaced before the wall of the side wing of the bumper.

4. Device according to Claim 3, **characterized in that** the boss further comprises a third chamfer on its front side facing towards the front of the vehicle, to cause the peg to become effaced when the side wing of the bumper is slid towards the front of the vehicle within the housing, thus allowing the bumper to be removed.

5. Device according to any one of Claims 1 to 4, **characterized in that** end stops (28) are provided at the end of the housing (15).

6. Device according to any one of Claims 1 to 5, **characterized in that** the rim (3) comprises a longitudinal rib (30) which rests against a partition (11) which runs roughly horizontally towards the inside of the vehicle under the lower edge (10) of the wing of the bodywork.

7. Device according to any one of Claims 1 to 6, **characterized in that** it further comprises a screw (31) passing both through the side wing of the bumper and the wing of the bodywork and holding the bumper in the direction of travel of the vehicle.

8. Device according to any one of Claims 1 to 7, **characterized in that** its constituent parts are moulded directly with the wing of the bodywork and with the bumper.
